# EUROPÄISCHE PATENTSCHRIFT

(11) **EP 2 245 285 B1**
(45) Veröffentlichungstag und Bekanntmachung des Hinweises auf die Patenterteilung: **09.01.2013**
(21) Anmeldenummer: 09707095.7
(22) Anmeldetag: 22.01.2009
(51) Int. Cl.: F02C 3/30, F02C 3/34, F02C 7/141, F02C 7/224

(54) **SYSTEM UND VERFAHREN ZUR REDUKTION VON SCHADSTOFFEN IN TRIEBWERKSABGASEN**
SYSTEM AND METHOD FOR THE REDUCTION OF HARMFUL SUBSTANCES IN ENGINE EXHAUST GASES
SYSTÈME ET PROCÉDÉ DE RÉDUCTION DES POLLUANTS DANS LES GAZ D'ÉCHAPPEMENT DES GROUPES MOTOPROPULSEURS

(30) Priorität: 31.01.2008 DE 102008006953; 31.01.2008 US 25015
(43) Veröffentlichungstag der Anmeldung: 03.11.2010
(73) Patentinhaber: Airbus Operations GmbH, 21129 Hamburg (DE)
(72) Erfinder: HOFFJANN, Claus, 21147 Hamburg (DE); SCHULDZIG, Hansgeorg, 21635 Jork (DE); STOLTE, Ralf-Henning, 22525 Hamburg (DE)
(74) Vertreter: Schicker, Silvia
(86) Internationale Anmeldenummer: PCT/EP2009/000383
(87) Internationale Veröffentlichungsnummer: WO 2009/095180

(56) Entgegenhaltungen:
- EP-A- 0 593 793
- DE-A1- 10 216 710
- US-A1- 2002 144 664
- US-A1- 2004 040 312

## Beschreibung

Die vorliegende Erfindung betrifft ein System und ein Verfahren zur Reduktion von Schadstoffen in Triebwerksabgasen.

Bei gegenwärtig in Luftfahrzeugen, insbesondere Flugzeugen eingesetzten und nach dem Betriebsprinzip einer Gasturbine arbeitenden Triebwerken, wird Außenluft mittels eines Verdichters komprimiert und anschließend einer Brennkammer zugeführt. In der Brennkammer wird die Außenluft mit Kraftstoff vermischt und gezündet. Das durch den Verbrennungsprozess erzeugte Abgas wird über eine Turbine geleitet, die einen mit der Turbine auf einer gemeinsamen Welle angeordneten oder einen durch ein Getriebe von der Turbine getrennten Verdichter sowie die eigentliche Vortriebseinheit, beispielsweise einen Turbofan oder Propeller, antreibt. Bei der Verbrennung des aus einem Kohlenwasserstoffgemischs bestehenden Kraftstoffs, wie z.B. Kerosin, mit Luft in der Brennkammer eines Flugzeugtriebwerks entstehen neben Stickoxiden (NOₓ) weitere Verbrennungsprodukte, wie z.B. CO₂, CO sowie unverbrannte Kohlenwasserstoffe. Insbesondere die Menge der während des Verbrennungsprozesses gebildeten Stickoxide hängt stark von der Verbrennungstemperatur in der Brennkammer ab. Hohe Verbrennungstemperaturen begünstigen die Stickoxidbildung. Darüber hinaus haben hohe Verbrennungstemperaturen in der Brennkammer eine starke Materialbelastung sowie hohe Spannungen im Triebwerk zur Folge. Besonders hohe Verbrennungstemperaturen werden in der Startphase des Flugzeugs erreicht, während der das Treibwerk zur Erfüllung der Schubanforderung unter Volllast läuft. Flugzeugtriebwerke, die mit hohen Verbrennungstemperaturen in der Brennkammer betrieben werden, erfordern daher einen besonders hohen Wartungsaufwand.

Zur Reduzierung der Stickoxidemissionen sowie zur Verringerung der thermischen Beanspruchung sollten Flugzeugtriebwerke daher mit möglichst geringen Verbrennungstemperaturen in der Brennkammer betrieben werden. Eine Absenkung der Verbrennungstemperatur in der Brennkammer eines Flugzeugtriebwerks kann beispielsweise durch Einspritzen von Wasser während des Verbrennungsprozesses realisiert werden. Das Wasser kann entweder dem Verdichter zugeführt oder in die Brennkammer des Triebwerks eingespritzt werden, wobei das Wasser üblicherweise in gesonderten Tanks an Bord des Flugzeugs mitgeführt werden muss. DE 10216710 offenbart die technischen Merkmale des Oberbegriffs vom Anspruch 1.

Der vorliegenden Erfindung liegt die Aufgabe zugrunde, ein System sowie ein Verfahren bereitzustellen, die es in besonders effizienter Art und Weise ermöglichen, die Verbrennungstemperatur in der Brennkammer eines Triebwerks zu senken und damit die Schadstoffemissionen im Betrieb des Triebwerks signifikant zu senken.

Zur Lösung dieser Aufgabe umfasst ein erfindungsgemäßes System zur Reduktion von Schadstoffen in Triebwerksabgasen eine Brennstoffzelle, die dazu eingerichtet ist, im Betrieb elektrische Energie sowie ein Wasserdampf enthaltendes Brennstoffzellenabgas zu erzeugen. Die Brennstoffzelle kann beispielsweise dazu eingerichtet sein, an Bord eines Flugzeugs elektrische Energie zur Bordstromversorgung zu erzeugen. Die in dem erfindungsgemäßen System zur Reduktion von Schadstoffen in Triebwerksabgasen verwendete Brennstoffzelle umfasst einen Kathodenbereich sowie einen durch einen Elektrolyt von dem Kathodenbereich getrennten Anodenbereich. Im Betrieb der Brennstoffzelle wird der Anodenseite der Brennstoffzelle ein Brennstoff, beispielsweise Wasserstoff, und der Kathodenseite der Brennstoffzelle ein sauerstoffhaltiges Oxidationsmittel, beispielsweise Luft, insbesondere aus einer Flugzeugkabine abgeführte Luft, zugeführt. Bei einer Polymerelektrolytmembran(PEM)-Brennstoffzelle reagieren die Wasserstoffmoleküle an einem im Anodenbereich vorhandenen Anodenkatalysator beispielsweise nach Gleichung (1)

H₂ → 2·H⁺ + 2·e⁻ (1)

und geben dabei unter Bildung von positiv geladenen Wasserstoffionen Elektronen an die Elektrode ab.

Die im Anodenbereich gebildeten H⁺-Ionen diffundieren anschließend durch den Elektrolyt zur Kathode, wo sie an einem im Kathodenbereich vorhandenen Kathodenkatalysator mit dem der Kathode zugeführten Sauerstoff sowie den über einen äußeren Stromkreis zur Kathode geleiteten Elektronen nach Gleichung (2)

0,5·O₂ + 2·H⁺ + 2·e⁻ → H₂O (2)

zu Wasser reagieren. Die Betriebstemperatur der Brennstoffzelle hängt von der Art des in der Brennstoffzelle eingesetzten Elektrolyt ab. Üblicherweise liegt jedoch das von der Brennstoffzelle im Betrieb erzeugte Wasser zumindest teilweise im gasförmigen Aggregatzustand vor, d.h. die Brennstoffzelle erzeugt im Betrieb ein wasserdampfgesättigtes Brennstoffzellenabgas.

Das erfindungsgemäße System zur Reduktion von Schadstoffen in Triebwerksabgasen umfasst vorzugsweise ferner einen Kraftstofftank zur Speicherung von einem Triebwerk, insbesondere einem Flugzeugtriebwerk im Betrieb zuzuführendem Kraftstoff. Als Kraftstoff dient vorzugsweise ein homogener Kohlenwasserstoff oder ein Kohlenwasserstoffgemisch, wie z.B. Kerosin. Der Kraftstofftank ist vorzugsweise dazu eingerichtet, Kraftstoff auch bei tiefen Temperaturen, wie sie üblicherweise im Flugbetrieb eines Flugzeugs auftreten, zu speichern.

Eine Kondensationsvorrichtung des erfindungsgemäßen Systems zur Reduktion von Schadstoffen in Triebwerksabgasen ist mit einem Abgasauslass der Brennstoffzelle verbunden. Der Kondensationsvorrichtung ist somit von der Brennstoffzelle im Betrieb erzeugtes, Wasserdampf enthaltendes Brennstoffzellenabgas zuführbar. Die Kondensationsvorrichtung ist dazu eingerichtet, den in dem Brennstoffzellenabgas enthaltenen Wasserdampf durch Kondensation in den flüssigen Aggregatzustand überführt. Ferner ist die Kondensationsvorrichtung dazu eingerichtet, das durch diesen Kondensationsprozess erhaltene Wasser zur Bildung eines Wasser/Kraftstoff-Gemischs in den Kraftstoff einzubringen.

Schließlich umfasst das erfindungsgemäße System zur Reduktion von Schadstoffen in Triebwerksabgasen eine Wasser/Kraftstoff-Gemischleitung, die mit dem Triebwerk verbunden ist. Über die Wasser/Kraftstoff-Gemischleitung kann dem Triebwerk Was-ser/Kraftstoff-Gemisch zugeführt werden. Bei der Verbrennung des Wasser/Kraftstoff-Gemischs treten in einer Brennkammer des Triebwerks geringere Temperaturen auf als bei der Verbrennung von reinem Kraftstoff. Durch die Absenkung der Verbrennungstemperatur in der Brennkammer des Triebwerks, beispielsweise während der Startphase eines Flugzeugs, können die Schadstoffemissionen, insbesondere die Stickoxidemissionen, im Betrieb des Triebwerks signifikant verringert werden. Darüber hinaus wird die thermische Beanspruchung des Triebwerks reduziert, was gegebenenfalls zu einer Verlängerung der Lebensdauer des Triebwerks sowie zu einer Verringerung des Wartungsaufwands für das Triebwerk führen kann. Schließlich wird die Reinigung des Triebwerkverdichters erleichtert, was sich vorteilhaft auf die Triebwerksleistung und damit gegebenenfalls auf den Kraftstoffverbrauch des Triebwerks auswirkt.

Im Vergleich zu konventionellen Wassereinspritzsystemen wird bei dem erfindungsgemäßen System zur Reduktion von Schadstoffen in Triebwerksabgasen zur Befeuchtung des dem Triebwerk zuzuführenden Kraftstoffs Wasserdampf genutzt, der von der Brennstoffzelle im Betrieb als Elektrodenreaktionsprodukt erzeugt wird. Bei dem erfindungsgemäßen System kann daher auf die Bereitstellung voluminöser Wassertanks zur Speicherung des gesamten dem Kraftstoff beizumischenden Wassers verzichtet werden. Das erfindungsgemäße Schadstoffreduktionssystem kann jedoch einen zusätzlichen Wassertank umfassen, so dass auch in Betriebsphasen der Brennstoffzelle, in denen von der Brennstoffzelle nicht ausreichend Wasserdampf enthaltendes Abgas erzeugt wird, eine ordnungsgemäße Befeuchtung des dem Triebwerk zuzuführenden Kraftstoffs möglich ist. Im Betrieb der Brennstoffzelle erzeugter Wasserdampf, der nicht zur Befeuchtung des dem Triebwerk zuzuführenden Kraftstoffs benötigt wird, kann beispielsweise in einer separaten Kondensationsvorrichtung zu Wasser kondensiert und anschließend in das Wasserversorgungsnetz des Flugzeugs eingespeist werden.

Bei einem Einsatz des erfindungsgemäßen Systems zur Reduktion von Schadstoffen in Triebwerksabgasen sind spezielle Wassereinspritzvorrichtungen am Triebwerk nicht länger erforderlich. Das erfindungsgemäße Schadstoffreduktionssystem kann ohne Weiteres mit beliebigen Triebwerken kombiniert werden, ohne dass hierzu konstruktive Umgestaltungen der Triebwerke erforderlich wären. Schließlich könnten kavitationsähnliche Effekte an den Verdichterschaufeln, wie sie beim direkten Einspritzen von Wasser in den Verdichter des Triebwerks auftreten können, vermieden werden.

Die Kondensationsvorrichtung des erfindungsgemäßen Systems zur Reduktion von Schadstoffen in Triebwerksabgasen kann eine Kondensationsvorrichtung sein, die Aussenluft als Wärmesenke nutzt, um die für die Kondensation des in dem Brennstoffzellenabgas enthaltenen Wasserdampfs erforderliche Energie bereitzustellen. Alternativ oder zusätzlich dazu kann die Kondensationsvorrichtung jedoch auch mit mit einem Kraftstoffauslass des Kraftstofftanks verbunden sein, so dass der Kondensationsvorrichtung Wasserdampf enthaltendes Brennstoffzellenabgas sowie Kraftstoff aus dem Kraftstofftank zuführbar ist. Die Kondensationsvorrichtung kann ferner dazu eingerichtet sein, das Wasserdampf enthaltende Brennstoffzellenabgas mit dem Kraftstoff in Kontakt zu bringen. Da der in dem Kraftstofftank gespeicherte Kraftstoff insbesondere im Flugbetrieb des Flugzeugs eine niedrige, in etwa der Umgebungstemperatur entsprechende Temperatur aufweist, kann der in dem Brennstoffzellenabgas enthaltene Wasserdampf beim Kontakt des Abgases mit dem kalten Kraftstoff durch Kondensation in den flüssigen Aggregatzustand überführt werden. Das durch diesen Kondensationsprozess erhaltene Wasser kann somit in der Kondensationsvorrichtung in den der Kondensationsvorrichtung von dem Kraftstofftank zugeführten Kraftstoff eingebracht werden. Schließlich kann die Wasser/Kraftstoff-Gemischleitung mit einem Auslass der Kondensationsvorrichtung verbunden sein, so dass dem Triebwerk das in der Kondensationsvorrichtung gebildete Wasser/Kraftstoff-Gemisch zugeführt werden kann.

Vorzugsweise umfasst das erfindungsgemäße System zur Reduktion von Schadstoffen in Triebwerksabgasen ferner eine Homogenisierungsvorrichtung zur Homogenisierung des in der Kondensationsvorrichtung gebildeten Wasser/Kraftstoff-Gemischs. Die Homogenisierungsvorrichtung kann in Form einer der Kondensationsvorrichtung nachgeschalteten separaten Vorrichtung ausgebildet oder in die Kondensationsvorrichtung integriert sein. Sie dient dazu, eine schichtweise Abtrennung von Wasser und Kraftstoff zu vermeiden und stattdessen eine homogene Wasser/Kraftstoff-Emulsion zu erzeugen.

Die Homogenisierungsvorrichtung kann eine Einrichtung zur Ausbildung eines Ultraschallfelds umfassen. Die Einrichtung zur Ausbildung eines Ultraschallfelds kann beispielsweise als sogenannte λ/4- oder λ/2-Schwinger bekannte Ultraschall-Sonotroden umfassen. Alternativ oder zusätzlich dazu kann die Homogenisierungsvorrichtung jedoch auch eine mechanische Mischeinrichtung zur Erzeugung einer gleichmäßigen Wasser/Kraftstoff-Emulsion umfassen. Die Homogenisierungsvorrichtung ist vorzugsweise dazu eingerichtet, eine Wasser/Kraftstoff-Emulsion zu erzeugen, die über einen definierten Zeitraum stabil ist.

Das in der Kondensationsvorrichtung gebildete und gegebenenfalls in der Homogenisierungsvorrichtung homogenisierte Wasser/Kraftstoff-Gemisch kann über die Wasser/Kraftstoff-Gemischleitung unmittelbar und unter Nutzung vorhandener Peripheriekomponenten, wie z.B. Leitungen, Pumpen, Ventile etc. in das Triebwerk eingespritzt werden. Alternativ dazu ist es jedoch auch möglich, in der Wasser/Kraftstoff-Gemischleitung einen Speicherbehälter zur Zwischenspeicherung des Wasser/Kraftstoff-Gemischs vorzusehen. Durch den Speicherbehälter können beispielsweise Betriebspausen oder Betriebsphasen der Brennstoffzelle überbrückt werden, in denen die in dem Brennstoffzellenabgas enthaltene Feuchtigkeit zu anderen Zwecken benötigt wird. Darüber hinaus gewährleistet der Speicherbehälter auch dann eine ordnungsgemäße Funktion des erfindungsgemäßen Schadstoffreduktionssystems, wenn die Temperatur des Kraftstoffs nicht gering genug ist, um eine ausreichende Kondensation des in dem Brennstoffzellenabgas enthaltenen Wasserdampfs zu sorgen.

Das erfindungsgemäße System zur Reduktion von Schadstoffen in Triebwerksabgasen kann ferner eine Vorwärmeinrichtung umfassen, die stromaufwärts der Kondensationsvorrichtung angeordnet sein kann. Die Vorwärmeinrichtung ist vorzugsweise thermisch mit der Brennstoffzelle oder einer anderen Wärmequelle gekoppelt und mit dem Kraftstoffauslass des Kraftstofftanks verbunden, um zumindest einen Teil des Kraftstoffs vor der Zuführung in die Kondensationsvorrichtung mit Hilfe der von der Brennstoffzelle oder der anderen Wärmequelle im Betrieb erzeugten Wärme auf eine gewünschte Temperatur zu erwärmen. Dadurch kann unter Umständen auf eine Leitungsisolation verzichtet werden. Ferner ermöglicht eine Vorwärmung des Kraftstoffs eine Verringerung des Kraftstoffverbrauchs.

Die thermische Kopplung der Vorwärmeinrichtung mit der Brennstoffzelle kann durch eine Verbindung der Vorwärmeinrichtung mit dem Abgasauslass der Brennstoffzelle realisiert werden, so dass der beispielsweise in Form eines Wärmetauschers ausgebildeten Vorwärmeinrichtung die sich in Abhängigkeit der Betriebstemperatur der Brennstoffzelle auf einer erhöhten Temperatur befindenden Brennstoffzellenabgase zugeführt werden können. Alternativ dazu ist es jedoch auch denkbar, die Vorwärmeinrichtung in einen Kühlkreislauf der Brennstoffzelle zu integrieren und die von der Brennstoffzelle im Betrieb erzeugte Abwärme über ein entsprechendes Kühlmittel auf die Vorwärmeinrichtung zu übertragen. Durch Vorwärmung des der Kondensationsvorrichtung zuzuführenden Kraftstoffs kann auch bei sehr niedrigen Kraftstofftemperaturen von bis zu -40°C, wie sie im Flugbetrieb eines Flugzeugs auftreten könne, Eisbildung in der Kondensationsvorrichtung zuverlässig vermieden werden.

Das erfindungsgemäße System zur Reduktion von Schadstoffen in Triebwerksabgasen kann ferner eine Nachwärmeinrichtung umfassen, die stromabwärts der Kondensationsvorrichtung angeordnet sein kann. Die Nachwärmeinrichtung ist vorzugsweise thermisch mit der Brennstoffzelle oder einer anderen Wärmequelle gekoppelt und mit einem Auslass der Kondensationsvorrichtung verbunden, um zumindest einen Teil des in der Kondensationsvorrichtung gebildeten Wasser/Kraftstoff-Gemischs vor der Zuführung in das Triebwerk mit Hilfe der von der Brennstoffzelle oder der anderen Wärmequelle im Betrieb erzeugten Wärme auf eine gewünschte Temperatur zu erwärmen. Wenn das Schadstoffreduktionssystem eine Homogenisierungsvorrichtung umfasst, ist die Nachwärmeinrichtung vorzugsweise stromabwärts der Homogenisierungsvorrichtung angeordnet Die thermische Kopplung der Nachwärmeinrichtung mit der Brennstoffzelle kann durch eine Verbindung der beispielsweise in Form eines Wärmetauschers ausgebildeten Nachwärmeinrichtung mit dem Abgasauslass der Brennstoffzelle realisiert werden, so dass der Nachwärmeinrichtung im Betrieb der Brennstoffzelle erzeugtes warmes Brennstoffzellenabgas zugeführt werden kann. Alternativ dazu kann die Nachwärmeinrichtung jedoch auch in einen Kühlkreislauf der Brennstoffzelle integriert sein, so dass die von der Brennstoffzelle im Betrieb erzeugte Wärme der Nachwärmeinrichtung über ein Kühlmittel zugeleitet wird.

Bei einer bevorzugten Ausführungsform des erfindungsgemäßen Schadstoffreduktionssystems ist der Kraftstofftank mit einer Brennstoffzellenabgasleitung verbunden, über die dem Kraftstofftank sauerstoffarmes Brennstoffzellenabgas zuführbar ist. Wie aus den obigen Reaktionsgleichungen (1) und (2) hervorgeht, wird im Betrieb der Brennstoffzelle des erfindungsgemäßen Schadstoffreduktionssystems Sauerstoff verbraucht. Wenn der Brennstoffzelle, beispielsweise auf ihrer Kathodenseite, Luft als Oxidationsmittel zugeführt wird, wird diese Luft um den bei der Brennstoffzellenreaktion verbrauchten Sauerstoff abgereichert, bevor sie die Brennstoffzelle als Abgas verlässt. Das von der Brennstoffzelle erzeugte sauerstoffarme Abgas ist ausreichend inert, um die Bildung eines zündfähigen Gasgemischs in dem Kraftstofftank zu verhindern. Eine Inertisierung des Kraftstofftanks mit Hilfe des sauerstoffarmen Brennstoffzellenabgases ermöglicht es somit, das Risiko einer Tankexplosion zuverlässig zu minimieren. Der Kraftstofftank kann unmittelbar mit dem Abgasauslass der Brennstoffzelle verbunden sein. Alternativ dazu kann dem Kraftstofftank auch Brennstoffzellenabgas zugeführt werden, das bereits die Kondensationsvorrichtung, eine Vorwärmeinrichtung oder eine Nachwärmeinrichtung durchströmt hat.

Bei einem erfindungsgemäßen Verfahren zur Reduktion von Schadstoffen in Triebwerksabgasen wird im Betrieb einer Brennstoffzelle erzeugtes, Wasserdampf enthaltendes Brennstoffzellenabgas in eine Kondensationsvorrichtung zugeführt. In der Kondensationsvorrichtung wird der in dem Brennstoffzellenabgas enthaltene Wasserdampf durch Kondensation in den flüssigen Aggregatzustand überführt. Das durch den Kondensationsprozess erhaltene Wasser wird in einem Triebwerk im Betrieb zuzuführenden Kraftstoff eingebracht, um ein Wasser/Kraftstoff-Gemisch zu bilden. Das Wasser/Kraftstoff-Gemisch wird schließlich dem Triebwerk zugeführt.

Vorzugsweise wird ferner der dem Triebwerk im Betrieb zuzuführende Kraftstoff in die Kondensationsvorrichtung zugeführt. In der Kondensationsvorrichtung kann das Wasserdampf enthaltende Brennstffzellenabgas mit dem Kraftstoff in Kontakt gebracht werden. Beim in Kontakt bringen des Wasserdampf enthaltenden Brennstoffzellenabgases mit dem eine vergleichsweise tiefe Temperatur aufweisenden Kraftstoff kann der in dem Brennstoffzellenabgas enthaltene Wasserdampf durch Kondensation in den flüssigen Aggregatzustand überführt und das durch den Kondensationsprozess erhaltene Wasser in den Kraftstoff eingebracht werden. Das in der Kondensationsvorrichtung gebildete Wasser/Kraftstoff-Gemisch kann schließlich dem Triebwerk zugeführt werden.

Vorzugsweise wird das in der Kondensationsvorrichtung gebildete Wasser/KraftstoffGemisch zur Vermeidung einer Entmischung und zur Bildung einer gleichmäßigen Wasser/Kraftstoff-Emulsion in einer Homogenisierungsvorrichtung, die eine Einrichtung zur Ausbildung eines Ultraschallfelds und/oder einer mechanische Mischeinrichtung umfassen kann, homogenisiert.

Das in der Kondensationsvorrichtung gebildete Wasser/Kraftstoff-Gemisch kann unmittelbar in das Triebwerk eingespritzt werden. Alternativ dazu kann das in der Kondensationsvorrichtung gebildete und gegebenenfalls in der Homogenisierungsvorrichtung homogenisierte Wasser/Kraftstoff-Gemisch jedoch auch in einem Speicherbehälter zwischengespeichert werden. Eine Rezirkulation ermöglicht es, eine Homogenisierungsvorrichtung kleiner auszulegen.

Zumindest ein Teil des Kraftstoffs kann vor der Zuführung in die Kondensationsvorrichtung in einer stromaufwärts der Kondensationsvorrichtung angeordneten Vorwärmeinrichtung, die thermisch mit der Brennstoffzelle oder einer anderen Wärmequelle gekoppelt und mit dem Kraftstoffauslass des Kraftstofftanks verbunden ist, mit Hilfe der von der Brennstoffzelle oder der anderen Wärmequelle im Betrieb erzeugten Wärme auf eine gewünschte Temperatur erwärmt werden.

Ferner kann zumindest ein Teil des in der Kondensationsvorrichtung gebildeten Wasser/Kraftstoff-Gemischs vor der Zuführung in das Triebwerk in einer stromabwärts der Kondensationsvorrichtung angeordneten Nachwärmeinrichtung, die thermisch mit der Brennstoffzelle oder einer anderen Wärmequelle gekoppelt und mit einem Auslass der Kondensationsvorrichtung verbunden ist, mit Hilfe der von der Brennstoffzelle oder der anderen Wärmequelle im Betrieb erzeugten Wärme auf eine gewünschte Temperatur erwärmt werden.

Dem Kraftstofftank kann über eine Brennstoffzellenabgasleitung zur Inertisierung sauerstoffarmes Brennstoffzellenabgas zugeführt werden.

Grundsätzlich kann dem Triebwerk ausschließlich in der Kondensationsvorrichtung gebildetes Wasser/Kraftstoff-Gemisch zugeführt werden. Alternativ dazu kann dem Triebwerk jedoch auch entweder nur reiner Kraftstoff oder eine Mischung aus reinem Kraftstoff und Wasser/Kraftstoff-Gemisch zugeführt werden. Bei einer bevorzugten Ausführungsform des erfindungsgemäßen Verfahrens zur Reduktion von Schadstoffen in Triebwerksabgasen wird dem Triebwerk das in der Kondensationsvorrichtung gebildete Wasser/Kraftstoff-Gemisch lediglich in bestimmten Betriebsphasen des Triebwerks zugeführt.

Vorzugsweise erfolgt die Zufuhr des in der Kondensationsvorrichtung gebildeten Wasser/Kraftstoff-Gemischs in das Triebwerk während der Start- und Aufstiegsphase eines von dem Triebwerk angetriebenen Luftfahrzeugs. Dadurch können die während dieser Phase auftretenden besonders hohen Temperaturen in der Brennkammer des Triebwerks wirksam abgesenkt werden. In Betriebsphasen des Triebwerks, in denen ohnehin ausreichend geringe Verbrennungstemperaturen in der Brennkammer vorherrschen, kann dagegen auf die Zufuhr von Wasser/Kraftstoff-Gemisch verzichtet werden.

Das erfindungsgemäße System zur Reduktion von Schadstoffen in Triebwerksabgasen ist in besonders vorteilhafter Weise in einem Luftfahrzeug, insbesondere einem Flugzeug, einsetzbar.

Zwei bevorzugte Ausführungsbeispiele eines erfindungsgemäßen Systems zur Reduktion von Schadstoffen in Triebwerksabgasen werden nun anhand der beigefügten schematischen Zeichnungen näher erläutert, von denen
- Figur 1: eine erste Ausführungsform eines Systems zur Reduktion von Schadstoffen in Triebwerksabgasen zeigt, und
- Figur 2: eine zweite Ausführungsform eines Systems zur Reduktion von Schadstoffen in Triebwerksabgasen zeigt.

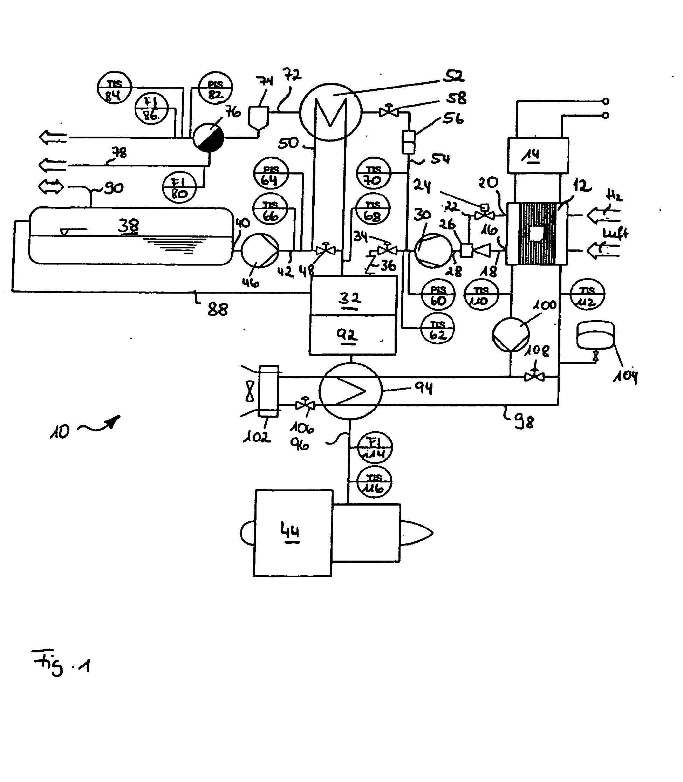

Figur 1 zeigt ein zum Einsatz in einem Flugzeug vorgesehenes System 10 zur Reduktion von Schadstoffen in Triebwerksabgasen. Das System 10 umfasst eine Brennstoffzelle 12, die einen Kathodenbereich sowie einen durch einen Elektrolyt von dem Kathodenbereich getrennten Anodenbereich aufweist. Im Betrieb der Brennstoffzelle 12 wird dem Anodenbereich Wasserstoff und dem Kathodenbereich als sauerstoffhaltiges Oxidationsmittel Luft aus einer Passagierkabine des Flugzeugs zugeführt. Über einen Stromregler 14 ist die Brennstoffzelle 12 an ein Netz zur Abnahme der von der Brennstoffzelle 12 im Betrieb erzeugten elektrischen Energie, beispielsweise das Bordstromversorgungsnetz des Flugzeugs angeschlossen.

Die Abgasabfuhr aus der Brennstoffzelle 12 erfolgt über eine mit einem Kathodenabgasauslass 16 verbundene Kathodenabgasleitung 18 sowie eine mit einem Anodenabgasauslass 20 verbundene Anodenabgasleitung 22. In der Anodenabgasleitung 22 ist ein Spülventil 24 angeordnet, das eine Spülung des Anodenbereichs der Brennstoffzelle 12 ermöglicht. Dadurch kann Stickstoff aus der dem Kathodenbereich der Brennstoffzelle 12 zugeführten Luft, der im Betrieb der Brennstoffzelle 12 von der Kathodenseite zur Anodenseite diffundieren kann, aus dem Anodenbereich der Brennstoffzelle 12 entfernt werden. Um zu verhindern, dass Wasserstoff in die Umgebung der Brennstoffzelle 12 gelangt, ist die Anodenabgasleitung 24 über eine Venturidüse 26 an die Kathodenabgasleitung 18 angeschlossen, so dass die Saugwirkung des die Kathodenabgasleitung 18 durchströmenden Kathodenabgases Spülgase aus der Anodenabgasleitung 22 in den Kathodenabgasstrom zieht. Zur Förderung des Gasstroms durch die Kathode der Brennstoffzelle 12 ist stromabwärts der Venturidüse 26 in einer Brennstoffzellenabgasleitung 28 ein Saugkompressor 30 angeordnet. Es sind jedoch auch andere Arten der Fluidförderung durch die Brennstoffzelle 12 denkbar.

Die Brennstoffzellenabgasleitung 28 mündet in eine Kondensationsvorrichtung 32. Der Brennstoffzellenabgasstrom durch die Brennstoffzellenabgasleitung 28 in Richtung der Kondensationsvorrichtung 32 wird durch ein in der Brennstoffzellenabgasleitung 28 angeordnetes Regelventil 34 sowie ein stromabwärts des Regelventils 34 angeordnetes Rückschlagventil 36 gesteuert.

Ein Kraftstofftank 38 weist einen Kraftstoffauslass 40 auf, der über eine Kraftstoffleitung 42 mit der Kondensationsvorrichtung 32 verbunden ist Der Kraftstofftank 38 dient der Speicherung von einem Triebwerk 44 im Betrieb zuzuführendem Kraftstoff, beispielsweise Kerosin. Zur Steuerung der Kraftstoffströmung durch die Kraftstoffleitung 42 sind in der Kraftstoffleitung 42 eine Kraftstoffpumpe 46 sowie ein Regelventil 48 angeordnet.

Über die Kraftstoffleitung 42 kann Kraftstoff aus dem Kraftstofftank 38 unmittelbar in die Kondensationsvorrichtung 32 zugeführt werden. Zumindest ein Teil des Kraftstoffs aus dem Kraftstofftank 38 kann jedoch auch über eine Kraftstoffvorwärmleitung 50 durch eine in Form eines Wärmetauschers ausgebildete Vorwärmeinrichtung 52 geleitet werden. Zur Versorgung der Vorwärmeinrichtung 52 mit thermischer Energie ist die Vorwärmeinrichtung 52 über eine Vorwärmabgasleitung 54 an die Brennstoffzellenabgasleitung 28 angeschlossen. Über die Vorwärmabgasleitung 54, in der ein Aktivkohlefilter 56 sowie ein Regelventil 58 angeordnet sind, wird der Vorwärmeinrichtung 52 von der Brennstoffzelle 12 im Betrieb erzeugtes warmes Abgas zugeführt.

Im Betrieb der Brennstoffzelle 12 wird im Kathodenbereich der Brennstoffzelle durch die Elektrodenreaktion Wasser erzeugt. Aus dem Kathodenabgasauslass 16 der Brennstoffzelle 12 strömt daher ein mit Wasserdampf gesättigter Abgasstrom. Die Temperatur des Brennstoffzellenabgasstroms hängt von der Betriebstemperatur der Brennstoffzelle 12 ab. Eine konventionelle Polymerelektrolytmembran-Niedrigtemperaturbrennstoffzelle wird üblicherweise bei Betriebstemperatur von ca. 60 bis 80°C betrieben. Polymerelektrolytmembran-Hochtemperaturbrennstoffzellen erreichen dagegen Betriebstemperaturen von bis zu 180°C. In jedem Fall ist die Temperatur des Brennstoffzellenabgasstroms insbesondere im Flugbetrieb des Flugzeugs deutlich höher als die in etwa der Umgebungstemperatur entsprechende Temperatur des im Kraftstofftank 38 aufgenommenen Kerosins.

Der Druck und die Temperatur in der Brennstoffzellenabgasleitung 28 werden mittels eines Drucksensors 60 sowie eines Temperatursensors 62 erfasst. Zur Druckmessung in der Kraftstoffleitung 42 ist ein Drucksensor 64 vorgesehen. Schließlich sind zur Temperaturerfassung in der Kraftstoffleitung 42 zwei Temperatursensoren 66, 68 vorhanden. Schließlich ist ein Temperatursensor 70 zur Messung der Temperatur in der Vorwärmabgasleitung 54 vorgesehen.

Nach dem Durchströmen der Vorwärmeinrichtung 52 wird das Brennstoffzellenabgas durch eine Abgasabfuhrleitung 72 geleitet. In der Abgasabfuhrleitung 72 sind ein Kondensatabscheider 74 sowie ein Kondensatableiter 76 zur Kondensation und Abscheidung von in dem Brennstoffzellenabgas enthaltenem Wasserdampf angeordnet. Das bei der Kondensation gewonnene Wasser wird über eine Wasserabfuhrleitung 78 dem Wasserversorgungsnetz des Flugzeugs zugeführt. Ein in der Wasserabfuhrleitung 78 angeordneter Durchflussmesser 80 dient der Erfassung der Strömung durch die Wasserabfuhrleitung 78. Der Druck, die Temperatur und die Strömung in der Abgasabfuhrleitung 72 werden dagegen mittels eines Drucksensors 82, eines Temperatursensors 84 und eines Durchflussmessers 86 gemessen.

Das aus der Abgasabfuhrleitung 72 austretende Brennstoffzellenabgas kann an die Umgebungsatmosphäre abgeführt werden. Alternativ dazu kann das sauerstoffarme Brennstoffzellenabgas jedoch auch in vorteilhafter Weise zur Inertisierung des Kraftstofftanks 38 verwendet werden. Zu diesem Zweck ist auch eine Kondensatorabluftleitung 88 mit dem Kraftstofftank 38 verbunden. Die Kondensatorabluftleitung 88 führt sauerstoff- und wasserarme Brennstoffzellenabluft in den Kraftstofftank 38, wo die Brennstoffzellenabluft zur Inertisierung und damit zur Verminderung der Explosionsgefahr des Kraftstofftanks 38 dient. Die Belüftung des Kraftstofftanks 38 erfolgt über eine Belüftungsleitung 90.

In der Kondensationsvorrichtung 32 wird das Wasserdampf enthaltende Brennstoffzellenabgas mit dem Kraftstoff aus dem Kraftstofftank 38 in Kontakt gebracht, d.h. in den Kraftstoff aus dem Kraftstofftank 38 eingeleitet. Aufgrund der niedrigen Temperatur des Kraftstoffs wird der in dem Brennstoffzellenabgas enthaltene Wasserdampf beim Kontakt mit dem Kraftstoff aus dem Kraftstofftank 38 in den flüssigen Aggregatzustand überführt. In der Kondensationsvorrichtung 32 wird somit ein Wasser/Kraftstoff-Gemisch gebildet. Der Kraftstoff aus dem Kraftstofftank 38 wird vor seiner Einleitung in die Kondensationsvorrichtung 32 mit Hilfe der Vorwärmeinrichtung 52 stets soweit erwärmt, dass die Bildung von Eis während des Kondensationsprozesses zuverlässig vermieden wird.

Um zu verhindern, dass es in der Kondensationsvorrichtung 32 zu einer schichtweisen Abtrennung von Wasser und Kerosin kommt, ist eine Homogenisierungsvorrichtung 92 zur Homogenisierung des in der Kondensationsvorrichtung 32 gebildeten Wasser/Kraftstoff-Gemischs vorgesehen. Die Homogenisierungsvorrichtung 92 umfasst als sogenannte λ/4- oder λ/2-Schwinger bekannte Ultraschall-Sonotroden, die es ermöglichen, ein Ultraschallfeld zu erzeugen. Durch die Beaufschlagung des Wasser/Kraftstoff-Gemischs mit Ultraschall wird für die Ausbildung einer homogenen Wasser/Kraftstoff-Emulsion gesorgt, die auch über einen definierten Zeitraum stabil ist. Eine Rezirkulation verbessert die Homogenität.

Vor ihrer Einspritzung in das Triebwerk 44 wird die Wasser/Kraftstoff-Emulsion durch eine Nachwärmeinrichtung 94 geleitet, die in einer die Kondensationsvorrichtung 32 sowie die Homogenisierungsvorrichtung 92 mit dem Triebwerk 44 verbindenden Wasser/Kraftstoff-Gemischleitung 96 angeordnet ist. Die Nachwärmeinrichtung 94 ist in einen Kühlkreislauf 98 der Brennstoffzelle 12 integriert, in dem ferner eine Kühlmittelpumpe 100, ein Kühler 102, ein Ausgleichsbehälter 104 sowie zwei Regelventile 106, 108 vorgesehen sind. Die Temperatur des den Kühlkreislauf 98 durchströmenden Kühlmittels wird mittels zweier Temperatursensoren 110, 112 überwacht. Falls gewünscht, kann die Wasser/Kraftstoff-Emulsion passiv, das heißt schwerkraftgetrieben durch die Wasser/Kraftstoff-Gemischleitung 96 gefördert werden.

Nach dem Durchströmen der Nachwärmeinrichtung 94 wird das Wasser/KraftstoffGemisch in das Triebwerk 44 eingespritzt. Ein Durchflussmesser 114 und ein Temperatursensor 116 erfassen die Strömung und die Temperatur in der Wasser/Kraftstoff-Gemischleitung 96. Durch das Einspritzen eines Wasser/Kraftstoff-Gemischs in das Triebwerk 44 kann die Verbrennungstemperatur in einer Brennkammer des Triebwerks 44 im Vergleich zur Verbrennung von reinem Kraftstoff signifikant verringert werden. Dies ermöglicht eine deutliche Reduktion der Stickoxidemissionen des Triebwerks im Betrieb. Darüber hinaus wird die thermische Belastung des Triebwerks 44 im Betrieb in vorteilhafter Weise reduziert.

Grundsätzlich ist es möglich, dem Triebwerk 44 stets eine Wasser/Kraftstoff-Emulsion zuzuführen. Es ist jedoch auch möglich, das Triebwerk 44 nur in bestimmten Betriebsphasen, beispielsweise während der Start- und Aufstiegsphase des Flugzeugs, mit Wasser/Kraftstoff-Emulsion und in den übrigen Betriebsphasen mit reinem Kraftstoff zu versorgen. Zu diesem Zweck kann der Kraftstofftank 38 beispielsweise durch eine in der Figur 1 nicht gezeigte weitere Kraftstoffleitung unmittelbar, d.h. unter Umgehung der Kondensationsvorrichtung 32 und der Homogenisierungsvorrichtung 92 mit dem Triebwerk 44 verbunden sein.

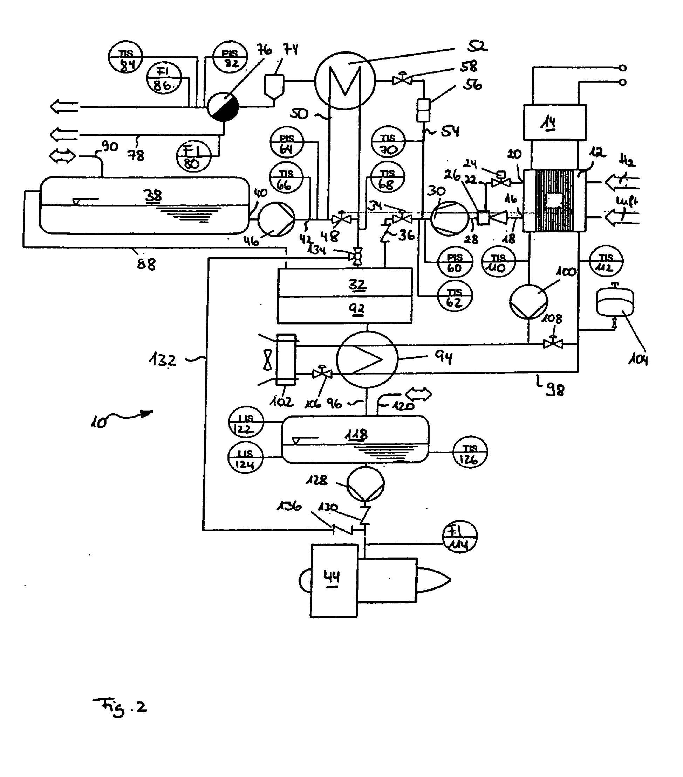

Das in Figur 2 gezeigte System 10 zur Reduktion von Schadstoffen in Triebwerksabgasen unterscheidet sich von der in Figur 1 veranschaulichten Anordnung dadurch, dass in der Wasser/Kraftstoff-Gemischleitung 96 ein zusätzlicher Emulsionspuffertank 118 zur Zwischenspeicherung der von der Kondensationsvorrichtung 32 und der Homogenisierungsvorrichtung 92 erzeugten Wasser/Kraftstoff-Emulsion angeordnet ist. Die Entlüftung des Emulsionspuffertanks 118 erfolgt über eine Entlüftungsleitung 120. Füllstandssensoren 122, 124 überwachen den Füllstand des Emulsionspuffertanks 118, während ein Temperatursensor 126 die Temperatur der Wasser/Kraftstoff-Emulsion im Emulsionspuffertank 118 misst. Zur Förderung der Wasser/Kraftstoff-Emulsion im Emulsionspuffertank 118 misst. Zur Förderung der Wasser/Kraftstoff-Emulsion aus dem Emulsionspuffertank 118 ist stromabwärts des Emulsionspuffertanks 118 in der Wasser/Kraftstoff-Gemischleitung 96 eine Emulsionspumpe 128 angeordnet. Stromabwärts der Emulsionspumpe 128 ist in der Wasser/Kraftstoff-Gemischleitung 96 ein Rückschlagventil 130 vorgesehen.

Darüber hinaus umfasst das in Figur 2 dargestellte System 10 zur Reduktion von Schadstoffen in Triebwerksabgasen eine weitere Kraftstoffleitung 132, die über ein Umschaltventil 134 von der Kraftstoffleitung 42 abzweigt. Die weitere Kraftstoffleitung 132 mündet stromabwärts des Emulsionspuffertanks 118, der Emulsionspumpe 128 und des Rückschlagventils 130 in die Wasser/Kraftstoff-Gemischleitung 96. Ein Rückschlagventil 136 verhindert, dass Wasser/Kraftstoff-Emulsion aus der Wasser/Kraftstoff-Gemischleitung 96 in die weitere Kraftstoffleitung 132 eindringt.

Bei dem in Figur 2 dargestellten Schadstoffreduktionssystem 10 kann durch eine Betätigung des Umschaltventils 134 wahlweise entweder Wasser/Kraftstoff-Emulsion oder reiner Kraftstoff aus dem Kraftstofftank 38 in das Triebwerk 44 eingespritzt werden. Beispielsweise kann dem Triebwerk 44 in der Start- und Aufstiegsphase des Flugzeugs zur Verringerung der Verbrennungstemperatur in der Brennkammer des Triebwerks 44 Wasser/Kraftstoff-Gemisch zugeführt werden. Sobald sich das Flugzeug in Reiseflughöhe befindet, kann dagegen reiner Kraftstoff aus dem Kraftstofftank 38 in das nun nicht länger unter Volllast betriebene Triebwerk 44 eingespritzt werden. Das in dem Brennstoffzellenabgas enthaltene Wasser kann dann ausschließlich in das Wasserversorgungsnetz des Flugzeugs eingespeist werden. Im Übrigen entsprechen der Aufbau und die Funktionsweise des Systems 10 gemäß Figur 2 dem Aufbau und der Funktionsweise der in Figur 1 gezeigten Anordnung.

## Patentansprüche

1. System (10) zur Reduktion von Schadstoffen in Triebwerksabgasen mit:
- einer Brennstoffzelle (12), die dazu eingerichtet ist, im Betrieb elektrische Energie sowie ein Wasserdampf enthaltendes Brennstoffzellenabgas zu erzeugen,
- einem Kraftstofftank (38) zur Speicherung von einem Triebwerk (44) im Betrieb zuzuführendem Kraftstoff, **gekennzeichnet durch**
- eine Kondensationsvorrichtung (32), die mit einem Abgasauslass (16) der Brennstoffzelle (12) verbunden ist, so dass der Kondensationsvorrichtung (32) Wasserdampf enthaltendes Brennstoffzellenabgas zuführbar ist, und die dazu eingerichtet ist, den in dem Brennstoffzellenabgas enthaltenen Wasserdampf **durch** Kondensation in den flüssigen Aggregatzustand zu überführen und das **durch** den Kondensationsprozess erhaltene Wasser zur Bildung eines Wasser/Kraftstoff-Gemischs in den Kraftstoff einzubringen, und
- eine Wasser/Kraftstoff-Gemischleitung (96), die mit dem Triebwerk (44) verbunden ist, so dass dem Triebwerk (44) Wasser/Kraftstoff-Gemisch zuführbar ist.

2. System nach Anspruch 1,
**dadurch gekennzeichnet, dass** die Kondensationsvorrichtung (32) ferner mit einem Kraftstoffauslass (40) des Kraftstofftanks (38) verbunden ist, so dass der Kondensationsvorrichtung (32) Wasserdampf enthaltendes Brennstoffzellenabgas sowie Kraftstoff zuführbar ist, dass die Kondensationsvorrichtung (32) dazu eingerichtet ist, das Wasserdampf enthaltende Brennstoffzellenabgas mit dem Kraftstoff in Kontakt zu bringen, um den in dem Brennstoffzellenabgas enthaltenen Wasserdampf durch Kondensation in den flüssigen Aggregatzustand zu überführen, und dass die Wasser/Kraftstoff-Gemischleitung (96) mit einem Auslass der Kondensationsvorrichtung (32) verbunden ist, so dass dem Triebwerk (44) das in der Kondensationsvorrichtung (32) gebildete Wasser/Kraftstoff-Gemisch zuführbar ist.

3. System nach Anspruch 1 oder 2,
**dadurch gekennzeichnet dass** das System eine Homogenisierungsvorrichtung (92) zur Homogenisierung des Wasser/Kraftstoff-Gemischs und/oder einen Speicherbehälter (118) zur Zwischenspeicherung des Wasser/Kraftstoff-Gemischs umfasst, wobei die Homogenisierungsvorrichtung (32) insbesondere eine Einrichtung zur Ausbildung eines Ultraschallfelds und/oder eine mechanische Mischeinrichtung umfasst.

4. System nach Anspruch 2 oder 3,
**gekennzeichnet durch** eine Vorwärmeinrichtung (52), die thermisch mit der Brennstoffzelle (12) oder einer anderen Wärmequelle gekoppelt und mit dem Kraftstoffauslass (40) des Kraftstofftanks (38) verbunden ist, um zumindest einen Teil des Kraftstoffs vor der Zuführung in die Kondensationsvorrichtung (32) mit Hilfe der von der Brennstoffzelle (12) oder der anderen Wärmequelle im Betrieb erzeugten Wärme auf eine gewünschte Temperatur zu erwärmen.

5. System nach einem der Ansprüche 1 bis 4,
**gekennzeichnet durch** eine stromabwärts der Kondensationsvorrichtung (32) angeordnete Nachwärmeinrichtung (94), die thermisch mit der Brennstoffzelle (12) oder einer anderen Wärmequelle gekoppelt und mit einem Auslass der Kondensationsvorrichtung (32) verbunden ist, um zumindest einen Teil des in der Kondensationsvorrichtung (32) gebildeten Wasser/Kraftstoff-Gemischs vor der Zuführung in das Triebwerk (44) mit Hilfe der von der Brennstoffzelle (12) oder der anderen Wärmequelle im Betrieb erzeugten Wärme auf eine gewünschte Temperatur zu erwärmen.

6. System nach einem der Ansprüche 1 bis 5,
**dadurch gekennzeichnet, dass** der Kraftstofftank (38) mit einer Brennstoffzellenabgasleitung (88) verbunden ist, über die dem Kraftstofftank (38) zur Inertisierung sauerstoffarmes Brennstoffzellenabgas zuführbar ist.

7. Verfahren zur Reduktion von Schadstoffen in Triebwerksabgasen mit den Schritten:
- Zuführen von im Betrieb einer Brennstoffzelle (12) erzeugtem, Wasserdampf enthaltendem Brennstoffzellenabgas in eine Kondensationsvorrichtung (32),
- Überführen des in dem Brennstoffzellenabgas enthaltenen Wasserdampfs durch Kondensation in den flüssigen Aggregatzustand in der Kondensationsvorrichtung (32),
- Einbringen des durch den Kondensationsprozess erhaltenen Wassers in einem Triebwerk (44) im Betrieb zuzuführenden Kraftstoff zur Bildung eines Wasser/Kraftstoff-Gemischs,
- Zuführen des Wasser/Kraftstoff-Gemischs zu dem Triebwerk (44).

8. Verfahren nach Anspruch 7,
**dadurch gekennzeichnet, dass** der dem Triebwerk (44) im Betrieb zuzuführende Kraftstoff in die Kondensationsvorrichtung (32) zugeführt wird, dass das Wasserdampf enthaltende Brennstoffzellenabgas in der Kondensationsvorrichtung (32) mit dem Kraftstoff in Kontakt gebracht wird, um den in dem Brennstoffzellenabgas enthaltenen Wasserdampf durch Kondensation in den flüssigen Aggregatzustand zu überführen, und dass das durch den Kondensationsprozess in der Kondensationsvorrichtung (32) gebildete Wasser/Kraftstoff-Gemisch dem Triebwerk (44) zugeführt wird.

9. Verfahren nach Anspruch 7 oder 8,
**dadurch gekennzeichnet, dass** das in der Kondensationsvorrichtung (32) gebildete Wasser/Kraftstoff-Gemisch in einer Homogenisierungsvorrichtung (92) insbesondere mittels einer Einrichtung zur Ausbildung eines Ultraschallfelds und/oder einer mechanische Mischeinrichtung homogenisiert wird und/oder dass das in der Kondensationsvorrichtung (32) gebildete Wasser/Kraftstoff-Gemisch in einem Speicherbehälter (118) zwischengespeichert wird.

10. Verfahren nach Anspruch 8 oder 9,
**dadurch gekennzeichnet, dass** zumindest ein Teil des Kraftstoffs vor der Zuführung in die Kondensationsvorrichtung (32) in einer Vorwärmeinrichtung (52), die thermisch mit der Brennstoffzelle (12) oder einer anderen Wärmequelle gekoppelt und mit dem Kraftstoffauslass (40) des Kraftstofftanks (38) verbunden ist, mit Hilfe der von der Brennstoffzelle (12) oder der anderen Wärmeuquelle im Betrieb erzeugten Wärme auf eine gewünschte Temperatur erwärmt wird.

11. Verfahren nach einem der Ansprüche 8 bis 10,
**dadurch gekennzeichnet, dass** zumindest ein Teil des in der Kondensationsvorrichtung (32) gebildeten Wasser/Kraftstoff-Gemischs vor der Zuführung in das Triebwerk (44) in einer stromabwärts der Kondensationsvorrichtung (32) angeordneten Nachwärmeinrichtung (94), die thermisch mit der Brennstoffzelle (12) oder einer anderen Wärmequelle gekoppelt und mit einem Auslass der Kondensationsvorrichtung (32) verbunden ist, mit Hilfe der von der Brennstoffzelle (12) oder der anderen Wärmequelle im Betrieb erzeugten Wärme auf eine gewünschte Temperatur erwärmt wird.

12. Verfahren nach einem der Ansprüche 7 bis 11,
**dadurch gekennzeichnet, dass** dem Kraftstofftank (38) über eine Brennstoffzellenabgasleitung (88) zur Inertisierung sauerstoffarmes Brennstoffzellenabgas zugeführt wird.

13. Verfahren nach einem der Ansprüche 8 bis 12,
**dadurch gekennzeichnet, dass** das in der Kondensationsvorrichtung (32) gebildete Wasser/Kraftstoff-Gemisch dem Triebwerk (44) lediglich in bestimmten Betriebsphasen zugeführt wird.

14. Verfahren nach Anspruch 13,
**dadurch gekennzeichnet, dass** das in der Kondensationsvorrichtung (32) gebildete Wasser/Kraftstoff-Gemisch dem Triebwerk (44) während der Start- und Aufstiegsphase eines von dem Triebwerk (44) angetriebenen Luftfahrzeugs zugeführt wird.

15. Verwendung eines Systems (10) zur Reduktion von Schadstoffen in Triebwerksabgasen nach einem der Ansprüche 1 bis 6 in einem Luftfahrzeug.

## Claims

1. A system (10) for reducing harmful substances in engine exhaust gases having:
- a fuel cell (12) which is adapted to generate electrical energy and a steam-containing fuel cell exhaust gas during operation,
- a fuel tank (38) for storing fuel which is to be supplied to an engine (44) during operation,
- **characterized by** a condensing device (32) which is connected to an exhaust gas outlet (16) of the fuel cell (12) so that steam-containing fuel cell exhaust gas is supplyable to the condensing device (32), and which is adapted to convert the steam contained in the fuel cell exhaust gas into the liquid state of aggregation by means of condensation and to introduce the water obtained as a result of the condensing process into the fuel in order to form a water/fuel mixture, and
- a water/fuel mixture line (96) which is connected to the engine (44) so that water/fuel mixture is supplyable to the engine (44).

2. A system according to Claim 1,
**characterised in that** the condensing device (32) is further connected to a fuel outlet (40) of the fuel tank (38) so that steam-containing fuel cell exhaust gas and fuel is supplyable to the condensing device (32), **in that** the condensing device (32) is adapted to bring the steam-containing fuel cell exhaust gas into contact with the fuel in order to convert the steam contained in the fuel cell exhaust gas into the liquid state of aggregation by means of condensation, and **in that** the water/fuel mixture line (96) is connected to an outlet of the condensing device (32) so that the water/fuel mixture formed in the condensing device (32) is supplyable to the engine (44).

3. A system according to Claim 1 or 2,
**characterised in that** the system comprises a homogenising device (92) for homogenising the water/fuel mixture and/or a storage container (118) for temporary storage of the water/fuel mixture, wherein the homogenising device (32) in particular comprises a device for forming an ultrasound field and/or a mechanical mixing device.

4. A system according to one of Claim 2 or 3,
**characterised by** a pre-heating device (52) which is thermally coupled to the fuel cell (12) or another heat source and is connected to the fuel outlet (40) of the fuel tank (38) in order to heat at least some of the fuel to a desired temperature before it is supplied to the condensing device (32) with the aid of the heat generated by the fuel cell (12) or the other heat source during operation.

5. A system according to one of Claims 1 to 4,
**characterised by** a post-heating device (94) which is arranged downstream of the condensing device (32) and is thermally coupled to the fuel cell (12) or another heat source and is connected to an outlet of the condensing device (32) in order to heat at least some of the water/fuel mixture formed in the condensing device (32) to a desired temperature before it is supplied to the engine (44) with the aid of the heat generated by the fuel cell (12) or the other heat source during operation.

6. A system according to one of Claims 1 to 5,
**characterised in that** the fuel tank (38) is connected to a fuel cell exhaust gas line (88) via which low-oxygen fuel cell exhaust gas is supplyable to the fuel tank (38) for the purpose of rendering it inert.

7. A process for reducing harmful substances in engine exhaust gases having the steps:
- supplying steam-containing fuel cell exhaust gas generated during operation of a fuel cell (12) to a condensing device (32),
- converting the steam contained in the fuel cell exhaust gas into the liquid state of aggregation in the condensing device (32) by means of condensation,
- introducing the water obtained as a result of the condensing process into fuel which is to be supplied to an engine (44) during operation in order to form a water/fuel mixture,
- supplying the water/fuel mixture to the engine (44).

8. A process according to Claim 7,
**characterised in that** the fuel to be supplied to the engine (44) during operation is supplied to the condensing device (32), **in that** the steam-containing fuel cell exhaust gas is brought into contact with the fuel in the condensing device (32) in order to convert the steam contained in the fuel cell exhaust gas into the liquid state of aggregation by means of condensation, and **in that** the water/fuel mixture formed in the condensing device (32) as a result of the condensing process is supplied to the engine (44).

9. A process according to Claim 7 or 8,
**characterised in that** the water/fuel mixture formed in the condensing device (32) is homogenised in a homogenising device (92), in particular by means of a device for forming an ultrasound field and/or a mechanical mixing device, and/or **in that** the water/fuel mixture formed in the condensing device (32) is temporarily stored in a storage container (118).

10. A process according to Claim 8 or 9,
**characterised in that**, before being supplied to the condensing device (32), at least some of the fuel is heated to a desired temperature in a pre-heating device (52), which is thermally coupled to the fuel cell (12) or another heat source and is connected to the fuel outlet (40) of the fuel tank (38), with the aid of the heat generated by the fuel cell (12) or the other heat source during operation.

11. A process according to one of Claims 8 to 10,
**characterised in that**, before being supplied to the engine (44), at least some of the water/fuel mixture formed in the condensing device (32) is heated to a desired temperature in a post-heating device (94) which is arranged downstream of the condensing device (32) and is thermally coupled to the fuel cell (12) or another heat source and is connected to an outlet of the condensing device (32), with the aid of the heat generated by the fuel cell (12) or the other heat source during operation.

12. A process according to one of Claims 7 to 11,
**characterised in that** low-oxygen fuel cell exhaust gas is supplied to the fuel tank (38) via a fuel cell exhaust gas line (88) for the purpose of rendering it inert.

13. A process according to one of Claims 8 to 12,
**characterised in that** the water/fuel mixture formed in the condensing device (32) is supplied to the engine (44) only in particular operating phases.

14. A process according to Claim 13,
**characterised in that** the water/fuel mixture formed in the condensing device (32) is supplied to the engine (44) during the start and ascent phase of an aircraft driven by the engine (44).

15. The use of a system (10) for reducing harmful substances in engine exhaust gases according to one of Claims 1 to 6 in an aircraft.

## Revendications

1. Système (10) de réduction des polluants dans les gaz d'échappement des groupes motopropulseurs, comprenant:
- une pile à combustible (12) conçue pour produire, pendant le fonctionnement, de l'énergie électrique ainsi qu'un gaz d'échappement contenant de la vapeur d'eau,
- un réservoir de carburant (38) servant à stocker un carburant à amener à un groupe motopropulseur (44) pendant le fonctionnement, **caractérisé par**
- un dispositif de condensation (32) relié à une sortie de gaz d'échappement (16) de la pile à combustible (12) de manière à pouvoir amener au dispositif de condensation (32) un gaz d'échappement de la pile à combustible contenant de la vapeur d'eau, et conçu pour transformer par condensation et faire passer dans l'état d'agrégation liquide la vapeur d'eau contenue dans le gaz d'échappement de la pile à combustible ainsi que pour introduire dans le carburant l'eau obtenue par le processus de condensation pour former un mélange eau/carburant, et
- une conduite de mélange eau/carburant (96) reliée au groupe motopropulseur (44) de manière à pouvoir amener le mélange eau/carburant au groupe motopropulseur (44).

2. Système selon la revendication 1,
**caractérisé en ce que** le dispositif de condensation (32) est en outre relié à une sortie de carburant (40) du réservoir de carburant (38) de manière à pouvoir amener au dispositif de condensation (32) un gaz d'échappement de la pile à combustible contenant de la vapeur d'eau et un carburant, que le dispositif de condensation (32) est conçu pour mettre en contact un gaz d'échappement de la pile à combustible contenant de la vapeur d'eau avec le carburant pour transformer par condensation et faire passer dans l'état d'agrégation liquide la vapeur d'eau contenue dans le gaz d'échappement de la pile à combustible et que ladite conduite de mélange eau/carburant (96) est reliée à une sortie du dispositif de condensation (32) de manière à pouvoir amener au groupe motopropulseur (44) le mélange eau/carburant formé dans le dispositif de condensation (32).

3. Système selon la revendication 1 ou 2,
**caractérisé en ce que** le système comprend un dispositif d'homogénéisation (92) pour homogénéiser le mélange eau/carburant et/ou un réservoir de stockage (118) pour stocker temporairement le mélange eau/carburant, ledit dispositif d'homogénéisation (92) comprenant en particulier un dispositif générateur d'un champ ultrasonore et/ou un dispositif de mélange mécanique.

4. Système selon la revendication 2 ou 3,
**caractérisé par** un dispositif de préchauffage (52) thermiquement couplé à la pile à combustible (12) ou à une autre source de chaleur et relié à la sortie de carburant (40) du réservoir de carburant (38) pour porter, avant introduction dans le dispositif de condensation (32), au moins une partie du carburant à une température souhaitée à l'aide de la chaleur produite par la pile à combustible (12) ou par l'autre source de chaleur pendant le fonctionnement.

5. Système selon l'une des revendications 1 à 4,
**caractérisé par** un dispositif de post-chauffage (94) qui, disposé en aval du dispositif de condensation (32), est thermiquement couplé à la pile de combustible (12) ou à une autre source de chaleur et relié à une sortie du dispositif de condensation (32) pour porter, avant introduction dans le groupe motopropulseur (44), au moins une partie du mélange eau/carburant formé dans le dispositif de condensation (32) à une température souhaitée à l'aide de la chaleur produite pendant le fonctionnement par la pile à combustible (12) ou par l'autre source de chaleur.

6. Système selon l'une des revendications 1 à 5,
**caractérisé en ce que** le réservoir de carburant (38) est relié à une conduite de gaz d'échappement de pile à combustible (88), par l'intermédiaire de laquelle un gaz d'échappement de la pile à combustible pauvre en oxygène peut être amené au réservoir de carburant (38) pour inertisation.

7. Procédé de réduction des polluants dans les gaz d'échappement des groupes motopropulseurs, comprenant pour étapes:
- amener dans un dispositif de condensation (32) un gaz d'échappement de la pile à combustible contenant de la vapeur d'eau et produit pendant le fonctionnement d'une pile à combustible (12),
- transformer par condensation le dispositif de condensation (32) et faire passer dans l'état d'agrégation liquide la vapeur d'eau contenue dans le gaz d'échappement de la pile à combustible,
- introduire dans un carburant à amener pendant le fonctionnement au groupe motopropulseur (44) l'eau obtenue par le processus de condensation pour former un mélange eau/carburant,
- amener le mélange eau/carburant au groupe motopropulseur (44).

8. Système selon la revendication 7,
**caractérisé en ce que** le carburant à amener au groupe motopropulseur (44) pendant le fonctionnement est amené au dispositif de condensation (32), que le gaz d'échappement de la pile à combustible contenant de la vapeur d'eau est mis en contact avec le carburant dans le dispositif de condensation (32) pour transformer par condensation et faire passer dans l'état d'agrégation liquide la vapeur d'eau contenue dans le gaz d'échappement de la pile à combustible et que le mélange eau/carburant formé par le processus de condensation dans le dispositif de condensation (32) est amené au groupe motopropulseur (44).

9. Système selon la revendication 7 ou 8,
**caractérisé en ce que** le mélange eau/carburant formé dans le dispositif de condensation (32) est homogénéisé dans un dispositif d'homogénéisation (92), en particulier au moyen d'un dispositif générateur de champ ultrasonore et/ou d'un dispositif de mélange mécanique et/ou que le mélange eau/carburant formé dans le dispositif de condensation (32) est temporairement stocké dans un réservoir de stockage (118).

10. Système selon la revendication 8 ou 9,
**caractérisé en ce qu'**au moins une partie du carburant est, avant introduction dans le dispositif de condensation (32), portée à une température souhaitée dans un dispositif de préchauffage (52) thermiquement couplé à la pile à combustible (12) ou à une autre source de chaleur et relié à la sortie de carburant (40) du réservoir de carburant (38), à l'aide de la chaleur produite pendant le fonctionnement par la pile à combustible (12) ou l'autre source de chaleur.

11. Système selon l'une des revendications 8 à 10,
**caractérisé en ce qu'**au moins une partie du mélange eau/carburant formé dans le dispositif de condensation (32) est, avant introduction dans le groupe motopropulseur (44), portée à une température souhaitée dans un dispositif de post-chauffage (94) qui, disposé en aval du dispositif de condensation (32), est thermiquement couplé à la pile à combustible (12) ou à une autre source de chaleur et relié à une sortie du dispositif de condensation (32), à l'aide de la chaleur produite pendant le fonctionnement par la pile à combustible (12) ou l'autre source de chaleur.

12. Système selon l'une des revendications 7 à 11,
**caractérisé en ce qu'**un gaz d'échappement de la pile à combustible pauvre en oxygène est amené au réservoir de carburant (38) par l'intermédiaire d'une conduite de gaz d'échappement de pile à combustible (88) pour inertisation.

13. Système selon l'une des revendications 8 à 12,
**caractérisé en ce que** le mélange eau/carburant formé dans le dispositif de condensation (32) est amené au groupe motopropulseur (44) uniquement pendant certaines phases de fonctionnement.

14. Système selon la revendication 13,
**caractérisé en ce que** le mélange eau/carburant formé dans le dispositif de condensation (32) est amené au groupe motopropulseur (44) pendant la phase de décollage et d'ascension d'un aéronef propulsé par ledit groupe motopropulseur (44).

15. Utilisation dans un aéronef d'un système (10) de réduction des polluants dans les gaz d'échappement des groupes motopropulseurs selon l'une des revendications 1 à 6.
